# EUROPEAN PATENT SPECIFICATION

(11) **EP 0 431 434 B1**
(45) Date of publication and mention of the grant of the patent: **24.02.1999**
(21) Application number: 90122513.6
(22) Date of filing: 26.11.1990
(51) Int. Cl.: G06F 13/42

(54) **Data interface system**
Datenschnittstellensystem
Système d'interface de données

(30) Priority: 02.12.1989 GB 8927317
(43) Date of publication of application: 12.06.1991
(73) Proprietor: MOTOROLA, INC., Schaumburg, IL 60196 (US)
(72) Inventor: Burri, Michel, CH-1218 GD-Saconnex (CH)
(74) Representative: Dunlop, Hugh Christopher

(56) References cited:
- EP-A- 0 258 872
- US-A- 4 144 583
- US-A- 4 408 272
- IBM TECHNICAL DISCLOSURE BULLETIN. vol. 22, no. 7, December 1979, NEW YORK US pages 2619 - 2621; R.A. DUPONT ET AL.: 'Serializer/Deserializer apparatus '
- O.FEGER 'Ein-Chip-Mikrocomputerhandbuch', pages 139-140, 1983, MARKT & TECHNIK, HAAR

## Description

This invention relates to a data interface system for use with a microcomputer unit (MCU) in control applications, such as automobile engines.

A control system in an automobile engine generally comprises a controlling microcomputer unit (MCU) which can communicate with a plurality of interface devices. The interface devices are coupled to operating parts of the engine such as stepping motors which can control, for example the air-conditioning and ambient temperature in the car, so that these operating parts may be monitored and controlled by the MCU. The interface devices store data received from the MCU which can be outputted to the associated operating parts of the engine. The interface devices also store data received from the associated operating parts of the engine which can be selectively outputted to the MCU.

Known systems which have peripheral devices coupled to a MCU, such as SPI and SCI systems, use serial buses to interconnect the MCU and interface devices wherein the MCU is coupled to each of the interface devices via clock, data and enable lines or transmit and receive lines respectively. When the MCU writes data to an interface device in order to control a particular part of the engine the address of the particular interface device is defined and sent by the MCU followed by a write bit and data bits.

When the MCU reads data from an interface device, the address of the particular interface device is defined and sent by the MCU followed by a read bit whereby the MCU reads data from the addressed interface device.

In order that a read or write operation can be performed, a stop bit or an idle time must be sent on the bus before a read or write operation is initiated.

Such a control system has a major disadvantage in that complex protocol specifying the type of operation is required to perform a write operation followed by a read operation. In addition, a considerable execution time is required for each operation which may be detrimental to the operation of the control system. For example, by the time a write operation has been performed and a read operation initiated if the data read from one of the interface devices required immediate controlling action by the MCU, the MCU could 'miss' reading the data in time and so will be unable to efficiently control an operating part of the engine.

US-A-4144583 describes a drive system for use in disk drives of a secondary storage facility. A controller of the facility polls each disk drive, using polling lines of a common bus. Each disk drive, when polled, then has the opportunity to respond to the controller using other lines of the bus. The controller is thus able to determine the status of each disk drive.

EP-A-0258872 describes a serial data transfer system including two serial data processors arranged to transfer data therebetween via a data line and clock line.

In accordance with a first aspect of the present invention there is provided a data interface system coupled to a processor for providing monitoring and control functions to a plurality of devices to be monitored and controlled, said data interface system comprising: a plurality of interface means for coupling to said plurality of devices wherein each one of said interface means comprises first and second data latch means, said first data latch means for holding data sent to a respective one of said plurality of interface means by said processor to be selectively outputted to said plurality of devices, said second data latch means for holding data received from said plurality of devices to be retrieved by said processor; and data communication means comprising one common bus line coupled between said processor and each one of said plurality of interface means, the communication means being arranged to initiate in response to said processor a pusb/pull operation with said common bus line, the push/pull operation comprising a first sequence wherein a data signal including several bits is sent from said process or to said plurality of interface means to be held in the first data latch means of the interface means of a selected one of said plurality of interface means for outputting to one of said plurality of devices and a subsequent second sequence wherein a second data signal including several bits is retrieved from the second data latch means of said interface means by said processor, wherein the data interface system is arranged for serial communication, and the data signal of the first sequence and of the second sequence are transferred on a single bus line of the data communication means.

In accordance with a second aspect of the present invention there is provided a method of controlling and monitoring a plurality of devices, as claimed in claim 8.

For these two embodiments an interface device is selected using a bit address generated by the processor and comparing it with a pre-defined address assigned to each of the interface devices.

In a third embodiment in accordance with the present invention the communication means may comprise a push/pull line and a data line for each of the interface devices. Thus, this eliminates the need for an assigned pre-defined address since the processor may select one of the interface devices by selecting one of the data lines.

In a fourth embodiment in accordance with the invention the communication means comprises a push/pull line, a data line intercoupled between the interface devices and the processor arranged in a chain and a clock line. The data signal is transmitted through the chain of interface devices from the processor during a push sequence and a data signal is subsequently pulled back through the chain of interface devices from the interface devices during a pull sequence to the processor. An interface device is selected according to a signal on the clock line.

Thus, it will be appreciated that each of the data interface systems according to the present invention described herein, enable a processor in one complete cycle to select an interface device, write data to the selected interface device and then read data stored in the interface device. Thus, the execution time required to write data to an interface device and to then read data from an interface is considerably reduced. This reduces the chances of the controlling MCU 'missing' an event which requires immediate controlling action.

Four data interface systems in accordance with the invention will now be described by way of example only with reference to the accompanying drawings in which:
Figure 1 shows a simplified block schematic diagram of a first data interface system in accordance with the present invention;
Figure 2 shows a block schematic diagram of one of the interface devices of the data interface system of Figure 1;
Figure 3a is a diagrammatic representation of a strobe signal internally generated by the interface device of Figure 2;
Figure 3b is a diagrammatic representation of a clocked signal generated by the interface device of Figure 2;
Figure 3c is a diagrammatic representation of a data signal transmitted on a bus of the data interface system of Figure 1;
Figure 4 shows a simplified block schematic diagram of a second data interface system in accordance with the present invention;
Figure 5 shows a block schematic diagram of one of the interface devices of the data interface system of Figure 4;
Figure 6 shows a simplified block schematic diagram of a third data interface system in accordance with the present invention; and
Figure 7 shows a block schematic diagram of one of the interface devices of the data interface system of Figure 6;
Figure 8 shows a simplified block schematic diagram of a fourth data interface system in accordance with the present invention; and
Figure 9 shows a block schematic diagram of one of the interface devices of the data interface system of Figure 8.

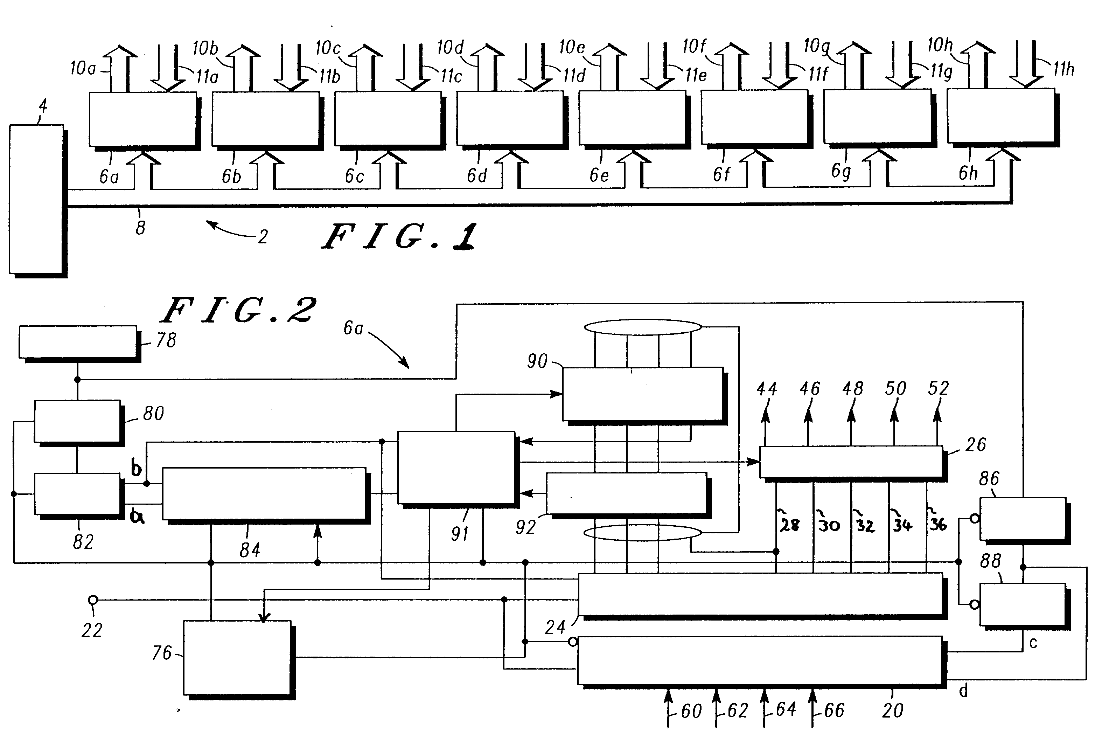

Figure 1 shows a data interface system 2 which is used, in a preferred embodiment, for controlling and monitoring a plurality of stepping motors (not shown) in a car engine. The data interface system 2 comprises a microcomputer unit (MCU) 4, a plurality of interface devices 6a-h and an MCU bus 8. The MCU bus 8 couples each of the interface devices 6a-h to the MCU 4. Although the preferred embodiments will be described in relation to eight interface devices coupled to eight stepping motors it will be appreciated by a person skilled in the art that the invention is not limited thereto.

Each one of the interface devices 6a-h has two bus lines 10a-h and 11a-h for coupling to the stepping motors (not shown). Data is transmitted from the interface devices 6a-h to the stepping motors along buslines 10a-h and data is received from the stepping motors along bus lines 11a-h.

The data interface system 2 in accordance with the invention is arranged to communicate with the MCU 4 by way of a push/pull mode of operation whereby in one complete cycle data can be written to a selected one of the interface devices 6a-h and then immediately after data can be read from the selected one of the interface devices: that is the push sequence is immediately followed by a pull sequence.

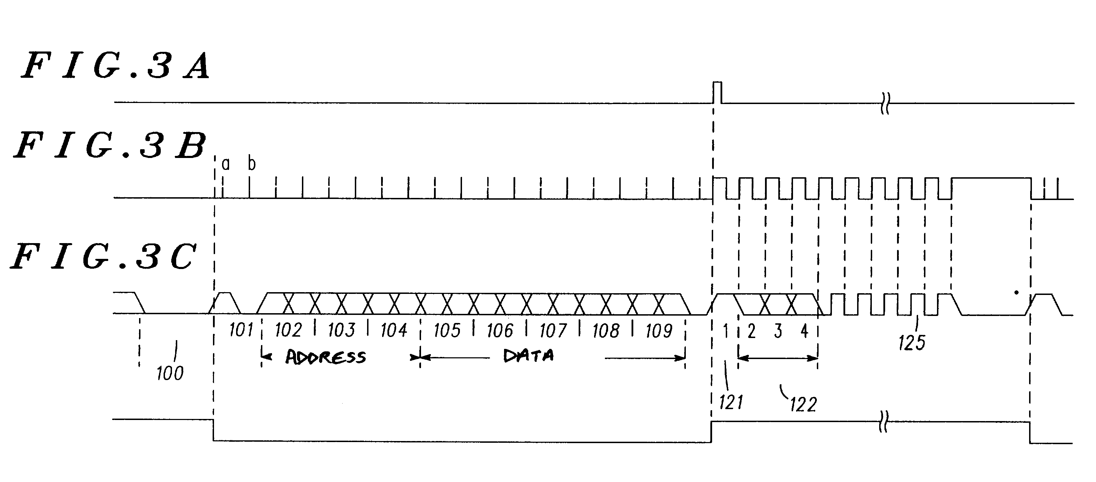

The push/pull mode of operation of the data interface system 2 will be described in more detail below, with reference to Figure 2 which shows one of the interface devices, for example interface device 6a.

The interface device 6a comprises an input/output node 22 for coupling to the MCU bus 8, a serial in/parallel out register (SPR) 24 coupled to the input/output node 22 and a parallel in/serial out register (PSR) 20 also coupled to the input/output node 22.

The SPR 24 receives data serially from the MCU bus 8 via the input/output node 22 and subsequently outputs the data in parallel to latches 26 for storage via five parallel bus lines 28-36. Latches 26 have outputs 44-52 which correspond to the bus lines 28-36 and which form the data bus 10a of Figure 1 for coupling to associated stepping motor (not shown).

The PSR 20 has four parallel inputs 60-66 which form the data bus 11a of figure 1 for coupling to one of the stepping motors (not shown). The PSR 20 stores data received in parallel from the associated stepping motor (not shown) via the parallel input lines 60-66. The data is then outputted serially onto the MCU bus 8 via input/output node 22 during a pull sequence.

In the preferred embodiment described herein data on the MCU bus 8 is coded according to the BI-phase code for security and to increase the signal-to-noise ratio. A BI-phase and noise detector 84 detects the BI-phase coding of the transmitted data and also the noise on the MCU bus 8. If the coding is correct and the noise is within the systems' limits, a data transmission validation signal is outputted to a validation control circuit 91. If a bit error is detected in the transmitted data, an error signal is generated and outputted to the validation control circuit 91 for storage until the end of the push sequence. By using BI-phase coding, the MCU 4, in order to initiate a push/pull mode of operation, need only generate a start bit to violate all bits present on the MCU bus 8 and hence force the MCU bus 8 to a different logic state. The change in logic state of the MCU bus 8 is detected by push/pull function detectors 76 of each of the interface devices which then executes the push/pull mode of operation of the interface devices. It will be appreciated, however, that different codes may also be implemented.

Each of the interface devices 6a-h has a specific pre-determined address which is stored in a programmed address memory 90. Since there are eight interface devices each address will comprise three bits. To select a particular one of the interface devices 6a-h, the MCU 4 defines the specific address of the interface device to be selected and sends it on the MCU data bus 8. A comparison of the sent addressed and the pre-determined address is then performed in each of the interface devices using a comparator 92.

A programming procedure is required to individually program each interface device with a specific address. This can be executed by the manufacturer or by the end user of the system. It will be appreciated that other methods of selecting one of the interface devices could also be used. For example, a method using a selection of pins using jumpers or thumble switches could also be implemented.

The interface device 6a also comprises an internal oscillator 78 which provides a clock signal as shown for example in Figure 3b for clocking the push/pull mode of operation of the interface device 6a. Different ceramic resonator frequencies may be used and are automatically selected by the MCU 4 in response to the possible bit rate frequency used by the data interface system.

During a push sequence of the push/pull mode of operation, the internal oscillator 78 clocks two counters 80 and 82 generating two separate clock signals a and b. These two clock signals a and b are used by the BI-phase code and noise detector 84 to sample each half bit (or half time slot) of the BI-phase coded data sent by the MCU 4. Depending on the data transmission either an error signal or a data transmission validation signal is outputted to the validation control circuit 91 for storage until the end of the push sequence.

During the pull sequence of the push/pull mode of operation, the internal oscillator 78 clocks two other counters 86 and 88. The clock signal d generated by the counter 86 is used to clock the outputting of the data stored in the PSR 20 to the MCU bus 8. The clock signal c is used to output a signal having a frequency which is a sub-multiple of the frequency of the signal generated by the internal oscillator 78.

Referring now also to Figures 3a and 3c, the manner in which data is communicated between the MCU 4 and the interface devices 6a-h during a push/pull mode of operation will now be described.

In order to write data to the interface devices 6a-h, the MCU initiates a push sequence of the push/pull mode of operation by generating a start bit, or as in the preferred embodiment three start bits 100, which violate the MCU bus 8 forcing the bus to a different logic state.

The push/pull function detectors 76 of each of the interface devices 6a-h detect the change in logic state of the bus whereby the push/pull mode of operation of each of the interface devices is enabled. Control logic (not shown) of the MCU 4 is then set to push data, coded according to the BI-phase code, to the interface devices 6a-h.

Figure 3c shows an exemplary data signal transmitted by the MCU bus 8 during a push/pull mode of operation. The three start bits 100 are followed by nine BI-phase coded bits comprising a sync bit 101 for synchronising the data transmission to the interface devices according to the internal oscillator 78, three address bits 102, 103, 104 to select one of the eight different interface devices 6a-h and five data bits 105-109 to control the five outputs 44-52 of the latches 26 of the selected interface device.

Each of the interface devices 6a-h, once enabled, receives the address and data bits transmitted by the MCU bus 8. The BI-phase and noise detector of each of the interface devices samples the data and if the data transmission is valid outputs a data transmission validation signal to the verification control circuit. The received three bit address is compared with the pre-programmed addresses stored in the programmed address memories 90. When a match of addresses is detected by one of the comparators, a match signal is outputted from the comparator 92 of the selected interface device to the validation control circuit 91.

The push sequence is clocked according to the internal oscillator 78 which is arranged so that number of internal clock signals a and b correspond to the number of address and data bits so as to ensure that there are sufficient clock cycles to push all the data into the SPR. Thus, the number of address and data bits are counted according to the internal clock signals a and b so as to prepare the push/pull function detector 76 to commute from the push mode to the pull mode. This commutation is executed in response to the next bit, a pull sync bit 121, following the address and data bits on the MCU bus 8.

A strobe signal S (shown in Figure 3a) is generated by the verification control circuit 91 in response to the pull sync bit 121 if and only if a match of addresses has been detected and if the BI-phase and noise detector validates the data transmission. The strobe signal S is sent to the latches 26 so as to store the contents of the SPR 24 to the latches 26 via lines 28-36. If an error signal is stored in the validation control circuit, the generation of the strobe signal is inhibited so that no data can be stored in the latches 26. The other seven unselected interface devices hold data bits previously stored in their respective latches until such time as the interface device is selected and a strobe pulse is generated for that interface device.

A push sequence typically takes 475 microseconds with the start bits requiring an additional 75 microseconds. Once a push sequence has been completed the push/pull function detector 76 of the interface devices is reset to initiate a pull sequence during which the data stored in the PSR of the addressed interface device is pulled to the MCU 4 via the MCU bus 8 according to the clock signal d.

The data on the MCU bus 8 comprises a pull sync bit 121 for synchronising the data transmission to the MCU 4 according to the internal oscillator 78. The data from the PSR of the addressed interface device comprises three data bits 122 which indicate the internal status of the addressed device. This may concern for example the status of the MCU bus' transmission, the behaviour of the output driver stage of the stepping motor, the nature of the stepping motor connections, or validation of a newly programmed address in the PROM address memory of the interface device. The status data bits 122 are followed by a submultiple frequency signal 125 which in the preferred embodiment described herein is the internal oscillator frequency divided by sixteen. Once the required clock cycles for pulling the data from the PSR of the addressed interface device are completed, the MCU 4 can initiate another push/pull mode of operation in which another of the interface devices is addressed.

The sub-multiple frequency signal 125 allows the MCU 4 to verify whether the data it receives from the interface device is valid and hence whether the MCU bus 8 is working correctly. In addition, the submultiple frequency signal 125 is an indication of the internal oscillator's frequency which can change with time. Thus, the MCU can immediately detect any frequency changes in the clock signal and adjust its frequency accordingly so that the push/pull mode of operation will not be forced out of synchronisation.

When the MCU 4 is pushing data to the SPR of the interface devices, the PSR of all the interface devices continuously capture their own input information via the parallel input lines 60-66 which may be from external input/output pins (not shown) or may be internal status bits.

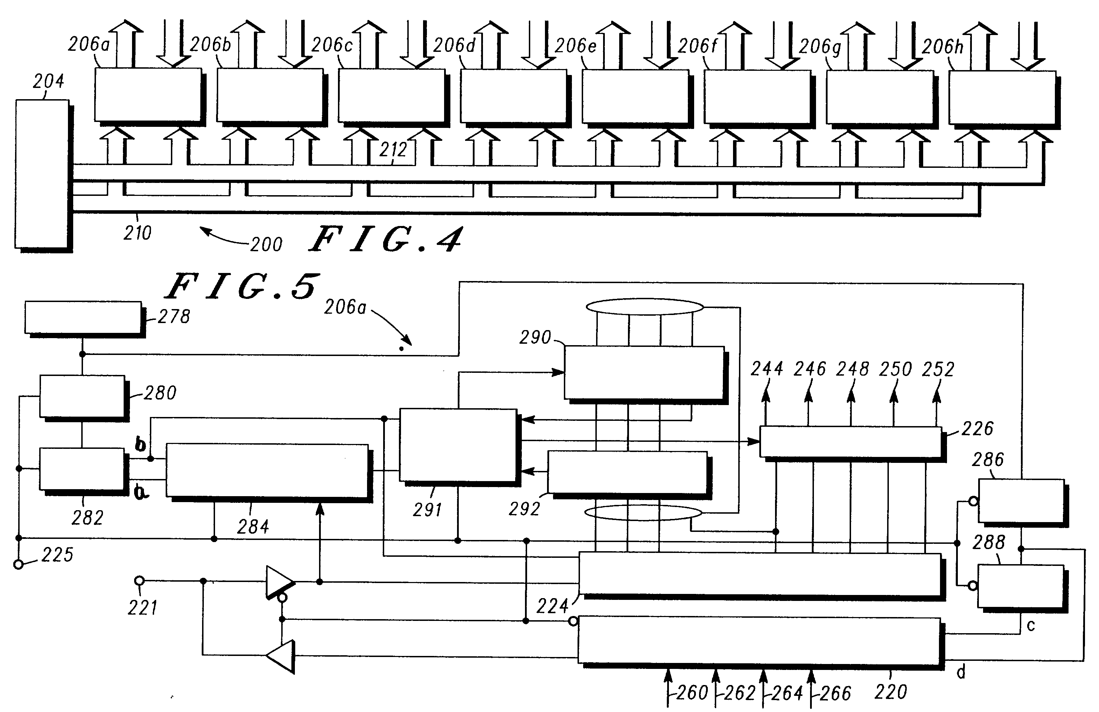

Referring now to Figure 4, a second data interface system 200 incorporating the invention is similar to the first data interface system described with reference to Figures 1, 2 and 3a-c in that the data interface system 200 is arranged to communicate with an MCU 204 by way of a push/pull mode of operation. However, the data interface system 200 uses two lines, a push/pull line 210 and a data line 212, for coupling the MCU 204 to the plurality of interface devices 206a-h. The data interface system 200 uses a signal generated by the MCU 204 and sent on the push/pull line 210 to execute the push/pull mode of operation in each of the interface devices 206a-h.

Referring also to Figure 5, the structure and function of the interface devices 206a-h, only one of which 206a is shown in detail in Figure 5, are similar to that of the interface device 6a and like components to those of Figure 2 are referenced by the same reference numeral plus the number two hundred. Since a signal on the push/pull line 210 initiates the push/pull mode of operation in each of the interface devices 206a-h, the need for a push/pull function detector 76 is eliminated.

The push/pull line 210 is coupled via a node 225 to the PSR 220, the validation control circuit 291, the BI-phase and noise detector 284 and the internal oscillator counters 280, 282, 286 and 288.

Once a push/pull mode of operation has been initiated by a signal on the push/pull line 210, a data signal is pushed by the MCU 204 to the plurality of interface devices 206a-h on the data line 212. The data signal comprises three address bits to select one of the interface devices 206a-h, followed by data bits.
The operation of the data interface system 200 is identical to that of the data interface system 2 described in detail above. The operation is clocked by the internal oscillator 278 and by resetting the signal on the push/pull line 210 a pull sequence can be initiated. Thus, in one complete cycle data can be pushed to a selected one of the interface devices and subsequently data can be pulled from the selected one of the interface devices.

It will be appreciated that since no start bit(s) is required to enable the push/pull mode of operation the length of the signal transmitted on the data line 212 is shorter than the corresponding signal on the MCU bus 8.

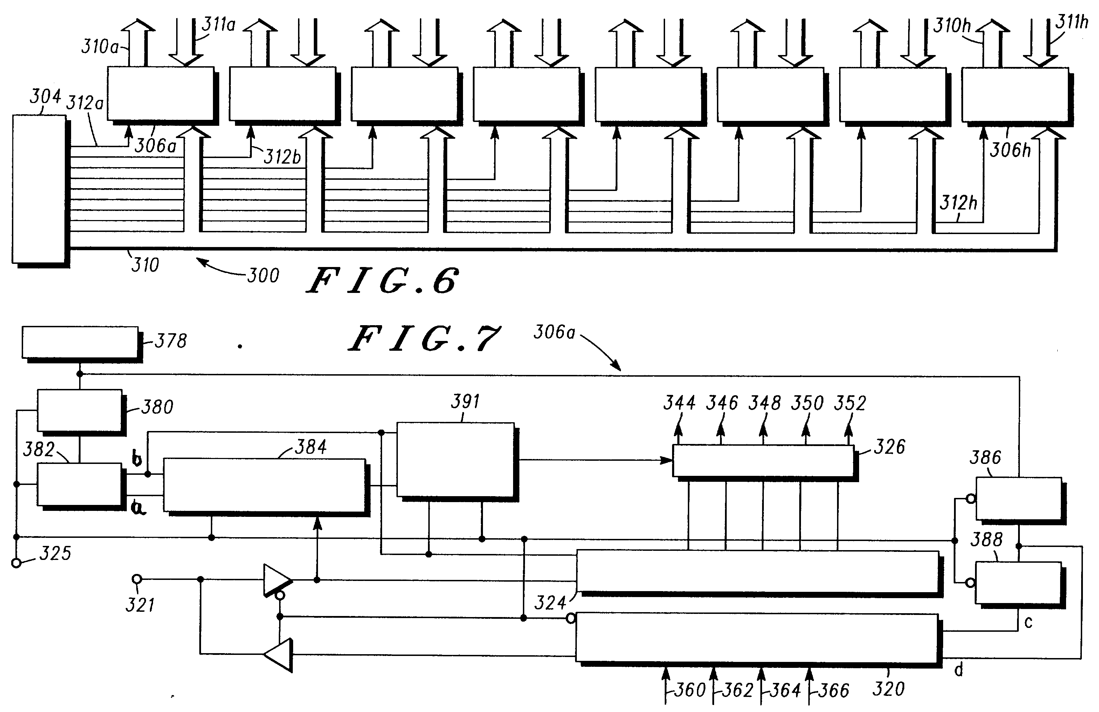

Referring now to Figure 6, a third data interface system 300 incorporating the invention is similar to the first data interface system 2 and the second data interface system 200 in that the data interface system 300 is arranged to communicate with an MCU 304 by way of a push/pull mode of operation using two lines 321 and 312. However, each of the plurality of interface devices 306a-h use a dedicated data line 312a-h to communicate with the MCU 304 and a push/pull line 310 to execute the push/pull mode of operation in each of the interface devices 306a-h. Referring also to Figure 7, the structure and function of the interface devices 306a-h, only one of which 306a is shown in Figure 7, are similar to that of the interface devices 206a-h except that the interface devices 306a-h do not require a programmed address memory 90 nor a comparator 92 in order to select one of the interface devices. Like components to those of Figure 2 are referenced by the same reference numeral plus the number three hundred.

To initiate a push/pull mode of operation, a signal generated by the MCU 304 is sent on the push/pull line 310 to each of the interface devices. The MCU 304 selects one of the data lines 312a-h and pushes a data signal to the selected one of the interface devices via the selected line. The MCU 304 resets the signal on the push/pull line 310 so as to initiate a pull sequence whereby data is pulled from the PSR 320 of the selected interface device to the MCU via the selected data line.

Thus, the fifth data interface system 300 does not require a defined bit address in order to select one of the interface devices 306a-h and hence the length of the signal transmitted on one of the data lines 312a-h is shorter than the corresponding signal on the data line 212. Typically the push sequence takes 275 microseconds. The unselected interface devices receive undefined coded data which is not BI-phase coded. For example, data (half time slot) comprising 11111 or 00000. On receipt of such coded data the BI-phase code detector 384 will inhibit the strobe pulse and hence no new data will be stored in latches 326.

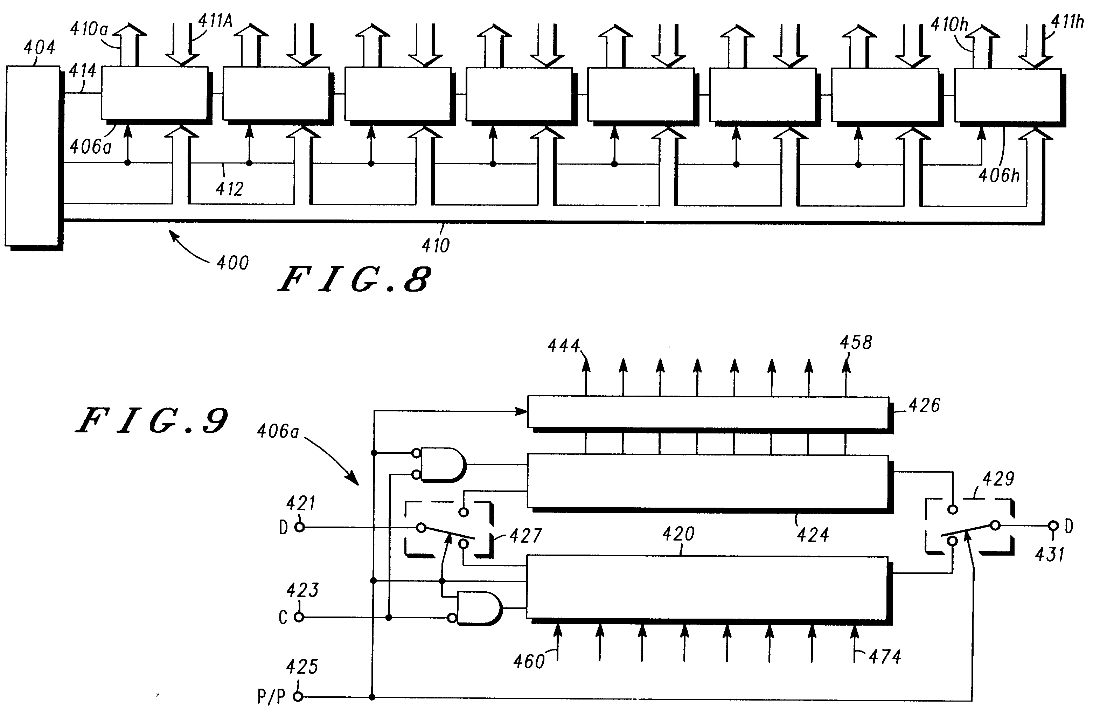

Referring now to Figure 8, a fourth data interface system 400 incorporating the invention is similar to the first data interface system 2 in that the data interface system 400 is arranged to communicate with an MCU 404 by way of a push/pull mode of operation. However, the data interface system 400 comprises three lines, a push/pull line 410, a clock line 412 and a data line 414, for coupling the MCU 404 to the plurality of interface devices 406a-h. The interface devices 406a-h are coupled together in a chain via the data line 414 which also couples the first interface device 406a to the MCU.

The data interface system 400 uses a signal generated by the MCU 404 and sent on the push/pull line 410 to execute the push/pull mode of operation in each of the plurality of interface devices 406a-h as with the second and third data interface systems 200 and 300 respectively. However, unlike the three systems 2, 200 and 300 described above, the push/pull mode of operation of each of the interface devices is synchronized by a signal on the clock line 412 coupled to each of the interface devices 406a-h. The interface devices 406a-h therefore do not require their own internal oscillator.

During a push sequence the MCU pushes data through the chain of interface devices. An interface device is selected according to the clock signal on the clock line 412 which is dependent on the number of interface devices in the chain and the cycle time required to push data through an interface device in the chain.

One or more of the interface devices may be updated in the same push mode of operation. Thus, during a push sequence selected interface devices may have their data updated whereas the unselected devices will receive the same data previously stored in the latches 426.

Figure 9 shows a block schematic diagram of one of the interface devices 406a of the data interface system 400. Like components to those of Figure 2 are referenced by the same reference numeral plus the number four hundred.

The interface device 406a comprises a SPR 424 having an input coupled to a data input/output node 421 via a first switch arrangement 427 for receiving a data signal serially from said processor and a PSR 420 having an output also coupled to the data input/output node 421 via the first switch arrangement 427 for outputting serially a data signal. Depending on the state of the first switch arrangement the data input/output node can be switched either to the input of the SPR 424 or the output of the PSR 420. The data input/output node 421 is coupled to the data line 414 for coupling to the next interface device in the chain or if it is the first interface device in the chain to the processor 404.

As with the SPR 24 of the interface device 2 of the first embodiment, the SPR 424 is coupled to latches 426 having parallel bus lines 444-452 which form the data bus 410a of Figure 8. The SPR 424 has an output coupled to an data output/input node 431 via a second switch arrangement 429.

The PSR 420 has four parallel inputs 460-466 which form the data bus 411a of figure 8. The PSR 420 has an input coupled to the data output/input node 431 via the second switch arrangement 429. Depending on the state of the second switch arrangement 429 the data output/input node can be switched to either the SPR's output or the PSR's input.

The push/pull line 410 is coupled via a node 425 to the first and second switch arrangements 427 and 429 and to the SPR and PSR.

If the MCU 404 initiates a push sequence, the signal on the push/pull line switches the first switch arrangement so that the data input/output node 421 is coupled to the input of the SPR 424 and switches the second switch arrangement so that the data output/input node 431 is coupled to the output of the SPR for each of the interface devices 406a-h. Thus, data is pushed from the MCU 404 through the SPRs of the chain of interface devices according to the clock signal.

The clock signal is provided so that the interface device to be selected receives a special signal on the clock input 423 by the time the data is pushed to its' data input/output node 421. On receipt of the special clock signal the data instead of being outputted from the data output/input node 431 to the next interface device is latched in the latches 426. On the next clock cycle the signal on the push/pull line 410 is reset so that a pull sequence is initiated.

The MCU sends a predetermined number of clocks which correspond to the number of bits implemented in the chain interface, after which the push/pull line 410 is reset so that a pull sequence is initiated.

During a pull sequence the signal on the push/pull line 410 switches the first switch arrangement 427 so that the data input/output node 421 is coupled to the output of the PSR 420 and switches the second switch arrangement 429 so that the data output/input node 431 is coupled to the input of the PSR 420. Thus, data held in the PSR of the chain of interface devices can be pulled through the PSRs to the MCU 404.

Many different data interface systems incorporating the push/pull mode of operation may be created. An advantage of using two or three lines to interconnect the MCU with the interface devices, as in the second, third and fourth embodiments of the invention, as opposed to the one line of the first embodiment is that the operating protocol is simpler. Also, the additional lines of the third and fourth embodiments eliminate the need to use a programming procedure to program the address into the programmed address memory. However, a major advantage of the first embodiment is that it uses one bus line to couple the MCU to a plurality of interface devices.

It will be appreciated that each of the data interface systems according to the present invention described herein, enable the MCU in one complete cycle to select an interface device, write data to the selected interface device and then read data stored in the interface device. Thus, the execution time required to write data to an interface device and to then read data from an interface is considerably reduced. This reduces the chances of the controlling MCU 'missing' an event which requires immediate controlling action.

It will also be appreciated that the bus line or lines of the preferred embodiments which are required to couple the interface devices to the MCU are considerably cheaper than the buses used in the prior art systems.

It will be appreciated that another advantage of the data interface systems according to the present invention over the prior art systems is that the data interface systems according to present invention requires a simple operating protocol which can be controlled by software. Thus, the present invention can be used with any MCU available on the market and will only need to be programmed accordingly on initialisation.

## Claims

1. A data interface system coupled (2) to a processor (4) for providing monitoring and control functions to a plurality of devices to be monitored and controlled, said data interface system (2) comprising:
a plurality of interface means (6a-h) for coupling to said plurality of devices wherein each one of said interface means comprises first (24) and second (20) data latch means, said first data latch means (24) for holding data to be written to a respective one of said plurality of interface means (6a-h) by said processor (4) to be selectively outputted to said plurality of devices, said second data latch means (20) for holding data received from said plurality of devices to be retrieved by said processor (4); and
data communication means (8) comprising one common bus line coupled between said processor (4) and each one of said plurality of interface means (6a-h), the communication means being arranged to initiate in response to said processor (4) a push/pull operation with said common bus line, the push/pull operation comprising a first sequence wherein a data signal including several bits is sent from said processor (4) to said plurality of interface means (6a-h) to be held in the first data latch means (24) of the interface means of a selected one of said plurality of interface means (6a-h) for outputting to one of said plurality of devices and a subsequent second sequence wherein a second data signal including several bits is retrieved from the second data latch means (20) of said interface means (6a-h) by said processor (4), wherein the data interface system (2) is arranged for serial communication, and the data signal of the first sequence and of the second sequence are transferred on a single bus line of the data communication means (8).

2. A data interface system according to claim 1 wherein said data signal pushed by said processor (4) on said one bus line comprises at least one start bit for initiating a push/pull operation, address bits for selecting one of said plurality of interface means (6a-h) and at least one data word.

3. A data interface system according to claim 2 wherein each one of said plurality of interface means (6a-h) further comprises a push/pull operation detector (76) for detecting said at least one start bit for initiating a push/pull operation and in response thereto initiating the push/pull operation in each one of said plurality of interface means.

4. A data interface system according to claim 2 or 3 wherein each one of said plurality of interface means (6a-h) further comprises:
programmable address means (90) for storing pre-defined address bits specific to each one of said plurality of interface means;
a comparator (92) for comparing the stored address with said address bits of the pushed data signal and for generating, in response to said comparator (92) detecting a match of addresses, an activating signal, whereby the selected one of said plurality of interface means (6a-h) is activated to receive and hold in its first data latch means (24) the at least one data word following said address word of said data signal during a first sequence.

5. A data interface system according to any preceding claim wherein each one of said plurality of interface means (6a-h) further comprises a clock signal generating means (78) for providing a clock signal for synchronising the push/pull operation.

6. A data interface system according to claim 5 wherein said clock signal generating means (78) is arranged to provide a sub-multiple frequency signal having a frequency which is a sub-multiple of the frequency of said clock signal.

7. A data interface system according to claim 6 wherein said data signal pulled from said selected interface means (6a-h) comprises the data received by said second data latch means (20) from said plurality of devices and said sub-multiple frequency signal, said sub-multiple frequency signal allowing for said processor (4) to verify that the pulled data information is valid.

8. A method of controlling and monitoring a plurality of devices using a processor (4) coupled to said plurality of devices by a data interface system (2), said data interface system (2) comprising a plurality of interface means (6a-h) and a common communication means (8) coupled between said processor (4) and each one of said plurality of interface means (6a-h), each one of said plurality of interface means (6a-h) comprising first (24) and second (20) data latch means, said first data latch means (24) for holding data sent to said plurality of interface means (6a-h) by said processor (4) for writing to a respective one of said plurality of devices, said second data latch means (20) for holding data received from said plurality of devices to be retrieved by said processor (4), said method comprising a first sequence followed by a subsequent second sequence, said first sequence comprising the steps of:
initiating a push/pull operation in each of said plurality of interface means (6a-h) with one common bus line;
selecting one of said plurality of interface means (6a-h) and activating said selected one of said plurality of interface means (6a-h) to receive a data signal sent by said processor (4) via said communication means (8); and
holding said data signal including several bits in said first data latch means (24) of said selected one of said plurality of interface means (6a-h) for writing to one of said plurality of devices, said second sequence comprising the steps of:
retrieving a data signal including several bits from said second data latch means (20) by said processor (4) via said communication means (8), said data signal comprising data received by said second data latch means (20) from said one of said plurality of devices, wherein the data interface system (2) is arranged for serial communication, and the data signal of the first sequence and of the second sequence are transferred on a single bus line of the data communication means (8).

## Patentansprüche

1. Datenschnittstellensystem (2), welches mit einem Prozessor (4) verbunden ist, zum Bereitstellen von Überwachungs- und Steuerfunktionen für eine Vielzahl von zu überwachenden und zu steuernden Vorrichtungen, wobei das Datenschnittstellensystem (2) aufweist:
eine Vielzahl von Schnittstelleneinrichtungen (6a-h) zur Verbindung mit der Vielzahl von Vorrichtungen, wobei jede einzelne der Schnittstelleneinrichtungen eine erste (24) und eine zweite (20) Datenhalteeinrichtung aufweist, wobei die erste Datenhalteeinrichtung (24) zum Halten von Daten dient, welche in eine jeweilige der Vielzahl von Schnittstelleneinrichtungen (6a-h) von dem Prozessor (4) zu schreiben sind, um selektiv an die Vielzahl von Vorrichtungen auszugeben zu werden, und die zweite Datenhalteeinrichtung (20) zum Halten von Daten dient, welche von der Vielzahl von Vorrichtungen empfangen werden, um von dem Prozessor (4) eingesammelt zu werden;
eine Datenkommunikationseinrichtung (8) mit einer gemeinsamen Busleitung, welche zwischen den Prozessor (4) und jede einzelne der Vielzahl von Schnittstelleneinrichtungen (6a-h) geschaltet ist, wobei die Kommunikationseinrichtung derart gestaltet ist, daß sie ansprechend auf den Prozessor (4) einen Gegentaktbetrieb mit der gemeinsamen Busleitung initiiert, wobei der Gegentaktbetrieb eine erste Sequenz aufweist, worin ein Datensignal einschließlich einiger Bits von dem Prozessor (4) an die Vielzahl von Schnittstelleneinrichtungen (6a-h) gesendet wird, um in der ersten Datenhalteeinrichtung (24) der Schnittstelleneinrichtung einer ausgewählten der Vielzahl von Schnittstelleneinrichtungen (6a-h) zur Ausgabe an eine der Vielzahl von Vorrichtungen gehalten zu werden, und eine darauffolgende zweite Sequenz aufweist, worin ein zweites Datensignal einschließlich einiger Bits von der zweiten Datenhalteeinrichtung (20) der Schnittstelleneinrichtung (6a-h) durch den Prozessor (4) eingesammelt wird, wobei das Datenschnittstellensystem (2) zur seriellen Kommunikation ausgelegt ist und das Datensignal der ersten Sequenz und der zweiten Sequenz auf einer einzelnen Busleitung der Datenkommunikationseinrichtung (8) transferierbar sind.

2. Datenschnittstellensystem nach Anspruch 1, dadurch gekennzeichnet, daß das durch den Prozessor (4) auf der Busleitung gesendete Datensignal zumindest ein Startbit zum Initiieren eines Gegentaktbetriebes, Adressbits zum Auswählen einer der Vielzahl von Schnittstelleneinrichtungen (6a-h) und zumindest ein Datenwort aufweist.

3. Datenschnittstellensystem nach Anspruch 2, dadurch gekennzeichnet, daß jede einzelne der Vielzahl von Schnittstelleneinrichtungen (6a-h) weiterhin einen Gegentaktbetriebsdetektor (76) zum Erfassen des zumindest einen Startbits zum Initiieren eines Gegentaktbetriebs und darauf ansprechend zum Initiieren des Gegentaktbetriebs in jeder einzelnen der Vielzahl von Schnittstelleneinrichtungen aufweist.

4. Datenschnittstellensystem nach Anspruch 2 oder 3, dadurch gekennzeichnet, daß jede einzelne der Vielzahl von Schnittstelleneinrichtungen (6a-h) weiterhin aufweist:
eine programmierbare Adressierungseinrichtung (90) zum Speichern vordefinierter Adressbits, welche für jede einzelne der Vielzahl von Schnittstelleneinrichtungen spezifisch sind;
einen Komparator (92) zum Vergleichen der gespeicherten Adresse mit den Adressbits des gesendeten Datensignals und zur Erzeugen eines Aktivierungssignals ansprechend darauf,
daß der Komparator (92) eine Übereinstimmung von den Adressen erfaßt, wodurch die ausgewählte der Vielzahl von Schnittstelleneinrichtungen (6a-h) aktiviert wird, um in ihrer ersten Datenhalteeinrichtung (24) das zumindest eine Datenwort folgend dem Adresswort des Datensignals während einer ersten Sequenz zu empfangen und zu halten.

5. Datenschnittstellensystem nach einem der vorhergehenden Ansprüche, dadurch gekennzeichnet, daß jede einzelne der Vielzahl von Schnittstelleneinrichtungen (6a-h) weiterhin eine Taktsignal-Erzeugungseinrichtung (78) zum Bereitstellen eines Taktsignals zum Synchronisieren des Gegentaktbetriebs aufweist.

6. Datenschnittstellensystem nach Anspruch 5, dadurch gekennzeichnet, daß die Taktsignal-Erzeugungseinrichtung (78) derart geschaltet ist, daß sie ein untervielfaches Frequenzsignal mit einer Frequenz liefert, welche ein Untervielfaches der Frequenz des Taktsignals ist.

7. Datenschnittstellensystem nach Anspruch 6, dadurch gekennzeichnet, daß das Datensignal, welches von der ausgewählten Schnittstelleneinrichtung (6a-h) geholt wird, die Daten, welche durch die zweite Datenhalteeinrichtung (20) von der Vielzahl von Vorrichtungen empfangen wird, und das untervielfache Frequenzsignal aufweist, wobei das untervielfache Frequenzsignal ermöglicht, daß der Prozessor (4) verifiziert, daß die geholten Dateninformationen gültig sind.

8. Verfahren zum Steuern und Überwachen einer Vielzahl von Vorrichtungen unter Verwendung eines Prozessors (4), welcher mit der Vielzahl von Vorrichtungen durch ein Datenschnittstellensystem (2) verbunden ist, wobei das Datenschnittstellensystem (2) aufweist:
eine Vielzahl von Schnittstelleneinrichtungen (6a-h) und eine gemeinsame Kommunikationseinrichtung (8), welche zwischen dem Prozessor (4) und eine jeweilige der Vielzahl von Schnittstelleneinrichtungen (6a-h) geschaltet ist, wobei jede der Vielzahl von Schnittstelleneinrichtungen (6a-h) eine erste (24) und eine zweite (20) Datenhalteeinrichtung aufweist, wobei die erste Datenhalteeinrichtung (24) zum Halten von Daten dient, welche an die Vielzahl von Schnittstelleneinrichtungen (6a-h) von dem Prozessor (4) gesendet werden, um in eine jeweilige der Vielzahl von Vorrichtungen geschrieben zu werden, und wobei die zweite Datenhalteeinrichtung (20) zum Halten von Daten dient, welche von der Vielzahl der Vorrichtungen empfangen werden, um durch den Prozessor (4) eingesammelt zu werden, wobei das verfahren eine erste Sequenz gefolgt von einer zweiten Sequenz aufweist, wobei die erste Sequenz folgende Schritte aufweist:
Initiieren eines Gegentaktbetriebs in jeder der Vielzahl von Schnittstelleneinrichtungen (6a-h) mit einer gemeinsamen Busleitung;
Auswählen einer der Vielzahl von Schnittstelleneinrichtungen (6a-h) und Aktivieren der ausgewählten der Vielzahl von Schnittstelleneinrichtungen (6a-h) zum Empfangen eines Datensignals, welches von dem Prozessor (4) über die Kommunikationseinrichtung (8) gesendet wird;
Halten des Datensignals einschließlich einiger Bits in der ersten Datenhalteeinrichtung (24) der ausgewählten der Vielzahl von Schnittstelleneinrichtungen (6a-h) zum Schreiben an eine der Vielzahl von Vorrichtungen, wobei die zweite Sequenz folgende Schritte aufweist:
Einsammeln eines Datensignals einschließlich einiger Bits von einer zweiten Datenhalteeinrichtung (20) durch den Prozessor (4) über die Kommunikationseinrichtung (8), wobei das Datensignal Daten aufweist, welche von der zweiten Datenhalteeinrichtung (20) von der einen der Vielzahl von Vorrichtungen empfangen werden, wobei das Datenschnittstellensystem (2) zur seriellen Kommunikation ausgelegt ist und das Datensignal der ersten Sequenz und der zweiten Sequenz auf einer einzelnen Busleitung der Datenkommunikationseinrichtung (8) transferiert werden.

## Revendications

1. Système d'interface de données couplé (2) à un processeur (4) pour assurer des fonctions de surveillance et de commande sur une pluralité de dispositifs à surveiller et commander, ledit système d'interface de données (2) comprenant :
une pluralité de moyens d'interface (6a-h) pour un couplage sur ladite pluralité de dispositifs où chacun desdits moyens d'interface comprend des premier (24) et second (20) moyens de verrouillage de données, ledit premier moyen de verrouillage de données (24) pour contenir des données pour qu'elles soient écrites sur l'un respectif de ladite pluralité de moyens d'interface (6a-h) par ledit processeur (4) pour qu'elles soient émises en sortie sélectivement sur ladite pluralité de dispositifs, ledit second moyen de verrouillage de données (20) pour contenir des données reçues depuis ladite pluralité de dispositifs pour qu'elles soient retrouvées par ledit processeur (4); et
un moyen de communication de données (8) comprenant une ligne de bus commune couplée entre ledit processeur (4) et chacun de ladite pluralité de moyens d'interface (6a-h), le moyen de communication étant agencé pour initier en réponse audit processeur (4) une opération push/pull avec ladite ligne de bus commune, l'opération push/pull comprenant une première séquence selon laquelle un signal de données qui inclut plusieurs bits est envoyé depuis ledit processeur (4) sur ladite pluralité de moyens d'interface (6a-h) pour être contenu dans le premier moyen de verrouillage de données (24) du moyen d'interface sélectionné de ladite pluralité de moyens d'interface (6a-h) pour une émission en sortie sur l'un de ladite pluralité de dispositifs et une seconde séquence suivante selon laquelle un second signal de données qui inclut plusieurs bits est retrouvé à partir du second moyen de verrouillage de données (20) dudit moyen d'interface (6a-h) par ledit processeur (4), où le système d'interface de données (2) est agencé pour une communication série et les signaux de données de la première séquence et de la seconde séquence sont transférés sur une unique ligne de bus du moyen de communication de données (8).

2. Système d'interface de données selon la revendication 1, dans lequel ledit signal de données poussé par ledit processeur (4) sur ladite une ligne de bus comprend au moins un bit de début pour initier une opération push/pull, des bits d'adresse pour sélectionner l'un de ladite pluralité de moyens d'interface (6a-h) et au moins un mot de données.

3. Système d'interface de données selon la revendication 2, dans lequel chacun de ladite pluralité de moyens d'interface (6a-h) comprend en outre un détecteur d'opération push/pull (76) pour détecter ledit au moins un bit de début pour initier une opération push/pull et en réponse, pour initier l'opération push/pull dans chacun de ladite pluralité de moyens d'interface.

4. Système d'interface de données selon la revendication 2 ou 3, dans lequel chacun de ladite pluralité de moyens d'interface (6a-h) comprend en outre :
un moyen d'adresse programmable (90) pour stocker des bits d'adresse prédéfinis spécifiques à chacun de ladite pluralité de moyens d'interface ;
un comparateur (92) pour comparer l'adresse stockée avec lesdits bits d'adresse du signal de données poussé et pour générer, en réponse au fait que ledit comparateur (92) détecte une correspondance des adresses, un signal d'activation et ainsi, celui sélectionné de ladite pluralité de moyens d'interface (6a-h) est activé pour recevoir et contenir dans son premier moyen de verrouillage de données (24) l'au moins un mot de données qui suit ledit mot d'adresse dudit signal de données pendant une première séquence.

5. Système d'interface de données selon l'une quelconque des revendications précédentes, dans lequel chacun de ladite pluralité de moyens d'interface (6a-h) comprend en outre un moyen de génération de signal d'horloge (78) pour produire un signal d'horloge pour synchroniser l'opération push/pull.

6. Système d'interface de données selon la revendication 5, dans lequel ledit moyen de génération de signal d'horloge (78) est agencé pour produire un signal de fréquence de sous-multiple présentant une fréquence qui est un sous-multiple de la fréquence dudit signal d'horloge.

7. Système d'interface de données selon la revendication 6, dans lequel ledit signal de données tiré depuis ledit moyen d'interface sélectionné (6a-h) comprend les données reçues par ledit second moyen de verrouillage de données (20) depuis ladite pluralité de dispositifs et ledit signal de fréquence de sous-multiple, ledit signal de fréquence de sous-multiple permettant audit processeur (4) de vérifier que l'information de données tirée est valide.

8. Procédé de commande et de surveillance d'une pluralité de dispositifs en utilisant un processeur (4) couplé à ladite pluralité de dispositifs par un système d'interface de données (2), ledit système d'interface de données (2) comprenant une pluralité de moyens d'interface (6a-h) et un moyen de communication commun (8) couplé entre ledit processeur (4) et chacun de ladite pluralité de moyens d'interface (6a-h), chacun de ladite pluralité de moyens d'interface (6a-h) comprenant des premier (24) et second (20) moyens de verrouillage de données, ledit premier moyen de verrouillage de données (24) pour contenir des données envoyées sur ladite pluralité de moyens d'interface (6a-h) par ledit processeur (4) pour qu'elles soient écrites sur l'un respectif de ladite pluralité de dispositifs, ledit second moyen de verrouillage de données (20) pour contenir des données reçues depuis ladite pluralité de dispositifs pour qu'elles soient retrouvées par ledit processeur (4), ledit procédé comprenant une première séquence suivie par une seconde séquence suivante,
ladite première séquence comprenant les étapes de :
initiation d'une opération push/pull dans chacun de ladite pluralité de moyens d'interface (6a-h) à l'aide d'une ligne de bus commune ;
sélection de l'un de ladite pluralité de moyens d'interface (6a-h) et activation dudit un sélectionné de ladite pluralité de moyens d'interface (6a-h) afin de recevoir un signal de données envoyé par ledit processeur (4) via ledit moyen de communication (8);
action consistant à contenir ledit signal de données qui inclut plusieurs bits dans ledit premier moyen de verrouillage de données (24) dudit un sélectionné de ladite pluralité de moyens d'interface (6a-h) pour qu'il soit écrit sur l'un de ladite pluralité de dispositifs,
ladite seconde séquence comprenant les étapes de :
recherche d'un signal de données qui inclut plusieurs bits à partir du second moyen de verrouillage de données (20) au moyen dudit processeur (4) via ledit moyen de communication (8), ledit signal de données comprenant des données reçues par ledit second moyen de verrouillage de données (20) depuis ledit un de ladite pluralité de dispositifs, dans lequel le système d'interface de données (2) est agencé pour une communication série et les signaux de données de la première séquence et de la seconde séquence sont transférés sur une unique ligne de bus du moyen de communication de données (8).
